# EUROPEAN PATENT APPLICATION

(11) **EP 4 530 950 A1**
(43) Date of publication of application: **02.04.2025**
(21) Application number: 23199707.3
(22) Date of filing: 26.09.2023
(51) Int. Cl.: G06Q 10/0639, B25F 5/00, G06Q 50/08, G07C 3/00

(54) **METHOD FOR TRACKING A USAGE OF A TOOL AND SYSTEM**

(71) Applicant: Hilti Aktiengesellschaft, 9494 Schaan (LI)
(72) Inventor: Crabolu, Michele, 9470 Buchs (CH); Bellusci, Giovanni, 9470 Buchs (CH)
(74) Representative: Hilti Aktiengesellschaft Corporate Intellectual Property

(57) **Abstract**

The invention relates to a method (1000) of tracking a usage of a tool (12) used by a construction worker (18). The method comprises at least a step of associating a tool (12) to a worker (18), so that a tool-worker pair is determined, based at least on a distance between the tool (12) and the worker (18). Furthermore, the invention relates to a worker-tag (200) and a system (10) for tracking the usage of a tool (12). The method (1000) and the devices contribute to the health and safety of workers (18) on construction sites (20).

## Description

The present invention relates to a method of tracking a usage of a tool used by a construction worker, for example on a building construction site. Today in construction, workers often just grab power tools from a box, a shelf, a van, or the like, at the start of a day. Every day different power tools can be used by different workers and for different works and in different amounts. As power tools become more and more complex and powerful, this behaviour may bear risks for health and safety of the workers. For example, it cannot be guaranteed that the tools are only used by sufficiently experienced workers who have been trained specifically for the respective tools.

Therefore, it is an object of the present invention to provide methods and systems that foster health and safety of construction workers who are using different types of construction tools.

This is achieved in a number of aspects of the present invention, in which a first aspect is a method of tracking a usage of a tool used by a construction worker. The method comprises at least a step of associating a tool to the worker, so that a tool-worker pair is determined, wherein the association is based at least on a distance between the tool and the worker.

The tool may be a power tool, for example a handheld power tool. It may be a measuring tool. It may be a cordless tool. Examples of tools may be construction vacuum cleaners, air purifiers, drilling and / or chiselling tools, grinders, cutting tools, for example saws, vibrating plates, breakers or the like. The tools may comprise a mobile platform, as is, for example, the case for construction robots.

Typically, such tools are not dangerous per se or, at least, the tools typically already comprise a plurality of risk-minimizing precautions. Risks for health and safety typically arise due to damaged tools, wear of the tool, or wrong or extended use of the tools, for example when using a tool longer than allowed or when lacking knowhow about the correct way of using the tool.

The method provides means to monitor the usage of the tool by the worker. For this, it comprises a step of associating the tool to the worker based on their distance to each other. In a very simple variant of the method, the tool the closest to the worker could be associated with the worker.

The method may be applied to a plurality of tools and / or to a plurality of workers. So, also is provided a method for determining a plurality of tool-worker pairs.

Health regulations, for example on human exposures to vibrations or dust, may be monitored easily, when knowing which worker uses which tool.

It may be advantageous if the method comprises a step of determining and / or logging a working condition property of the tool. Then, for example, the closest tool that is, moreover, currently running, i. e. where the tool has a working condition property representing that the tool is running, may be associated with the worker, in particular if the worker is known to work with a tool in the same moment.

When reaching a limit, set, for example, by the health regulations, the worker may be warned accordingly, the tool may be paused or stopped and / or handed over to a different worker not yet reaching the limit. As a whole, health regulations may be fulfilled without explicit efforts of the worker, which, in turn, fosters health and safety of the worker or the workers on the construction site.

The method also allows for verifying that a worker has sufficient knowledge and / or is certified to use the tool. It is conceivable that a database containing data on trainings, permissions, certificates and / or the like that the worker has fulfilled or gained is queried. In particular, it may be looked up in the database, whether the worker is allowed to use tools of the type of the tool and / or fulfills all requirements to do so.

Logged data about the associations, i. e. data about which worker used which tools and / or which tool was used by which workers, may help to fulfill quality-related requirements or other documentation requirements.

A plurality of different working condition properties may be determined and / or logged.

The working condition property may relate to a use mode of the tool. For example, it may correspond to whether the tool is running or not, i. e. switched on or off. It may distinguish if the tool is operated or just in motion, for example carried by the worker from one place to another. In this context "operated" may refer to a use mode wherein the motor of the tool is powered and running. The working condition property may relate to whether the tool is in an idle condition or in a working condition. The idle condition may refer to a condition wherein the motor of the tool is powered and running but no load is applied, i. e. the tool is not in contact with base material to be worked.

The working condition property may relate to distinguishing if the tool is transported or not. Further distinctions may relate to how the tool is transported, for example by a motor-driven mobile platform or manually carried by a person.

The working condition property may relate to a type, for example concrete vs wood, a shape or a dimension, for example a thickness, or any other property of the base material the tool is working.

The working condition property may relate to a type of an insert attached to the tool, for example a wood drill bit versus a concrete drill bit.

The working condition property may relate to a type or a status, e. g. usable versus worn, of a consumable which is being used together with the tool. The consumable may be, for example, a bolt versus a screw.

The working condition property may relate to a type of task the tool is performing, for example drilling, chiselling, grinding, sawing, sanding, hammering, coring, etc.

The working condition property may relate to occurrences or types of misuse of the tool, for example unintended drops from height, working inadequate material, for example drilling in rebars without using an adequate drill bit, cutting metal with a wood blade in case of a sawing tool, etc.

The working condition property may relate to a working direction of the tool, for example upwards, downwards, overhead, horizontal, etc.

The working condition property may relate to the type of the tool, for example drilling, sawing, grinding tool, etc.

The working condition property may also relate to a timing information, for example a start time, an end time and / or a duration, for example a current duration how long the tool is already working since its last start, etc.

The working condition property may be determined by the tool itself. Additionally, or as an alternative, a tool-tag may be attached to the tool. The tool-tag may be configured to determine the working condition property of the tool it is attached to.

The working condition property may be determined by analysing vibrations and / or by analysing electric, magnetic, and / or electro-magnetic fields. Vibrations may include sounds or any kind of accelerations of the tool. As vibrations may propagate through housings or the like, it is possible that a tool-tag may determine a large variety of working condition properties of the tool the tool-tag is attached to. If the tool is or comprises an electric motor or a coil or the like, then a working condition property relating to whether the tool is working or not can also be determined by detecting electric, magnetic, and / or electro-magnetic fields generated by electric currents running through the motor and / or the coil.

Alternatively, or additionally, the working condition property may be determined by a magnetometer and / or a gyroscope. In these ways, the tool itself does not need to be modified to communicate the working condition property to the tool-tag. The tool-tag can determine the working condition property by itself.

A health-related property of the worker may be determined. The health-related property may be related to, for example, vibration, air, an air-related property, e. g. dust-related property like dust concentration, a size of particles and / or a type of particles. So, the working condition property may be linked to the health-related property. Hence, a possible impact of working with the tool on the worker can be determined. For example, by extrapolating this impact into the future the worker can be protected preemptively. An individually adapted acceptable time of working with the tool under the specific circumstances of the specific construction site and / or the specific work can be calculated and / or prescribed.

The tool-worker pair is determined based on a distance. In particular, if a plurality of tools is in the vicinity of the worker, e. g. at the same or nearly the same distances, tools the worker is not working with may be associated to him erroneously. Therefore, it may be advantageous if a confidence level of the association between the tool and the worker is calculated. A tool-worker pair may, for example, only be established if the confidence level exceeds a certain confidence threshold. Otherwise, a user of the method may be informed about the lack of confidence and / or a plurality of pairs of similar confidence is determined in parallel.

To improve the confidence level or to improve the quality of the association of the tool-worker pair, the tool may be based, in addition to the distance, on the working condition property. In particular, it is conceivable that the tool-worker pair is formed based on the distance and at least one of a start time, an end time, a duration of the tool.

Furthermore, the tool may be associated to the worker based on the health-related property of the worker. Therefore, it is also conceivable that the tool-worker pair is formed based on the distance and a start time, an end time, an intensity and / or a frequency spectrum, for example of vibrations the worker is affected, for example when working with certain types of the tool.

The distance between the tool and the worker may be measured optically, for example using camera images and image processing. Alternatively, or additionally, the distance may be measured using a radio signal. For example, an amplitude, a runtime and / or a phase of the radio signal may be measured. The radio signal may be a low-power signal, e. g. like a signal commonly named as "Bluetooth", "BLE" or "Bluetooth Low Energy", Wi-Fi, Ultra-wide band ("UWB"), or the like.

The signal may comprise a unique identifier of the entity it is emitted from, in particular the tool or the worker.

The signal may comprise timestamp data. The timestamp data may be synchronized over several, preferably all, tools, tool-tags and / or worker-tags that emit similar signals.

It has been proven useful to use an extended Kalman filter for analysing the distances.

In one embodiment an emitter of the signal, for example a communication interface, e. g. a "BLE" or "Wi-Fi" interface, is installed in and / or on the tool. The communication interface may be part of the tool-tag. Thus, it may be attached to a housing of the tool. The emitted signal may be received by a receiver, which may also be a communication interface, attached to the worker and / or a receiver being part of a central computer separately placed on the construction site.

The central computer and / or the worker-tag may be in the form of a handheld device, for example a laptop, a tablet computer, a smartphone, or a wearable.

Once the receiver receives several signals from several emitters, their relative signal strengths, phases, timestamp data and / or runtimes may be compared. It is also conceivable that the receiver is configured to determine a direction, in particular at least one angle of incidence of the signal. Where the receiver is part of the worker-tag, the worker-tag may derive the closest tool autonomously and tool-worker pairs may be determined one by one. Where the receiver is part of the central computer, the central computer may determine several tool-worker pairs at once.

Other embodiments may vary in that emitters are part of the worker-tags, the tools and / or the tool-tags. The receivers may be part of the other components mentioned, in particular of the tools, the tool-tags or, respectively, the central computer.

A further aspect of the invention concerns a **worker-tag** that is configured to be attached and / or to be carried by a construction worker, having a microcontroller and a communication interface, for example a BLE interface, that is configured to determine a distance to a tool. It may have a weight of less than 0.5 kg, so that it can be carried easily. To be attachable to the worker, it may have a clip or a hanger for clipping or hanging the worker-tag to or at a clothing of the worker. It is also conceivable that the worker-tag is mounted onto or into a protector, for example a helmet, a jacket, or a glove, of the worker.

The worker-tag may be configured to determine a working condition property of a tool used by the construction worker. For example, even if the worker-tag is attached to the construction worker, a pose of a worker may be indicative of a working condition property relating to the direction of work of the tool the worker works with. For example, if the worker is bent forward this might be indicative for the tool being used for working downwards, e. g. for working a floor.

Another aspect of the invention is a **system** comprising a tool and a worker-tag attachable to a worker and as previously described, wherein the system is configured to track a usage of the tool using the previously described method.

The system may also comprise a tool-tag. The tool-tag may be attached to the tool. It may comprise a communication device. The tool-tag may be configured to determine a working condition property of a tool the tool-tag is attached to.

The system, in particular the tool, the tool-tag, the worker-tag or a central computer of the system, may be configured to determine a distance to a worker and / or a tool-worker pair.

The tool-tag may comprise a loudspeaker, so that it can raise an alarm. The system may be configured to raise the alarm if the tool or the worker is in a critical state and / or if a critical situation is about to arise.

The tool-tag may comprise one or more sensors. For example, it may comprise a humidity and / or a temperature sensor, a gyroscope, a location finder, e. g. a satellite-based location finder like a GNSS system, a magnetometer, a sensor for visible light, UV- and / or infrared light. It may also comprise an ultrasound emitter and / or receiver.

The tool-tag may also be configured to detect critical behaviours of the tool, e. g. unintended falls of the tool.

It may comprise an emergency button. The emergency button may be configured to trigger the alarm.

If the tool-tag runs on a battery, either rechargeable or not, it may favourably have a battery life of at least 3 years, which corresponds to typical service-free lifetimes of tools on construction sites.

The system may be configured that if a distance between a tool and a worker or between a tool and the central computer exceeds a critical threshold or, in general, if the location of the tool is outside a predetermined area, for example outside the construction site, the tool stops working and / or is configured to refrain from starting. In that way, the tool and / or the tool-tag may comprise a Geo-fencing functionality.

Furthermore, the system may comprise a cloud-based computer. The cloud-based computer may be connected to the central computer and / or to the tools, the tool-tags and / or the worker-tags. It may be configured to collect, analyse, and / or aggregate data of one or more construction sites. This enables a centralized online tracking of a large number of tools from distance by only one or a few users.

Having data of all the tool-tags or, respectively, tools, and all the worker-tags, or, respectively, workers, the cloud-based computer may be configured to determine and / or correct pairings between tools and workers. As an example, it may be that a tool-tag T1 is the closest tool for a worker-tag W1 in the vicinity of worker-tag W1, so that the worker-tag W1 pairs with the tool-tag T1. But it may be that a worker-tag W2 is even closer to tool-tag T1 than W1, and that tool-tag T1 is also the closest tool for worker-tag W2. In such a case the worker-tool W2 might also pair with the tool-tag T1, if only distance is taken into account for pairings. The cloud-based computer may then detect such a conflicting pairing between the tool-tag T1 and the worker-tags W1 and W2. It may resolve the conflict by comparing the absolute distances between the worker-tags W1 or, respectively, W2 and the tool-tag T1. Hence, it may correct the pairings such that the worker-tag W2 is registered as paired with the tool-tag T1 and it may dismiss the pairing between the worker-tag W1 and the tool-tag T1.

Moreover, a history of pairings may be taken into account when determining current tool-worker pairs. For example, if at a time to T1 was paired with W1, then it may be conceived that T1 remains to be paired with W1 at a later time t1, even if their relative distance is, in particular temporarily, larger than, for example, a distance between T2 and W1. Or, a pairing could be upheld as long as the worker is continuously working with a tool. The pairing or the corresponding association may be only changed in moment when the corresponding tool is not working.

The invention will be described further, by way of example, with reference to the accompanying drawings which illustrate preferred embodiments thereof, it being understood that the following description is illustrative of and not limitative of the scope of the invention. The features shown there are not necessarily to be understood to scale and are presented in such a way that the special features of the invention are clearly visible. The various features may be realized individually or in combination in any desired way in variants of the invention.

### In the drawings:

- Fig. 1: shows a system for tracking a usage of a tool;
- Fig. 2: shows a tool-tag;
- Fig. 3: shows a worker-tag;
- Fig. 4: shows a block diagram of a tool-tag;
- Fig. 5: shows a block diagram of a worker-tag; and
- Fig. 6: shows a method of tracking a usage of a tool.
Same reference signs are used for functionally equivalent elements in all figures.

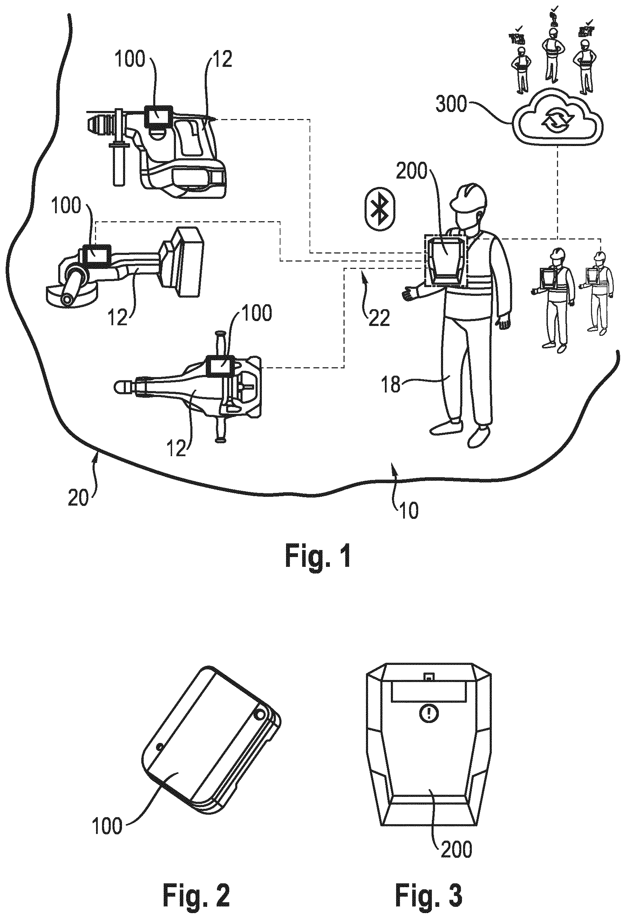

**Fig. 1** schematically shows a construction site **20,** in which is a system **10** comprising several tools **12.** Each of the tools is equipped with a tool-tag **100.** Furthermore, the system 10 comprises a worker-tag **200,** which is attached to a worker **18.** The tools 12, including their tool-tags 100, and the worker 18 with his worker-tag 200, are on the construction site 20. The construction site 20 may be, for example a large building construction site.

The system 10 is not limited to one worker-tag 200, but may comprise several worker-tags 200, each preferably attached to or carried by a worker. In particular, the system 10 may be used by a plurality of workers 18.

The tool-tags 100 and the worker-tag 200 are connected to each other via radio signals 22. In fig. 1 the signals 22 are represented by dashed lines. The signals 22 may follow a standard like, for example, a standard commonly named as "BLE" or "Bluetooth Low Energy". Alternatively, or additionally, the tool-tags 100 may send broadcast signals, so that an explicit connection to the worker-tag 200 is not required.

The worker-tag 200 is configured to communicate with a cloud-based computer **300,** for example using an Internet connection.

The system 10 is configured to track usages of the tools 12 according to a method that will be explained in more detail further below.

**Fig. 2** shows a tool-tag 100 in a perspective view and **fig. 3** shows a worker-tag 200 in a front-view. The worker-tag 200 is attachable to a worker 18 (see fig. 1). It has a clip on its backside, which is therefore not visible in the front-view according to fig. 3.

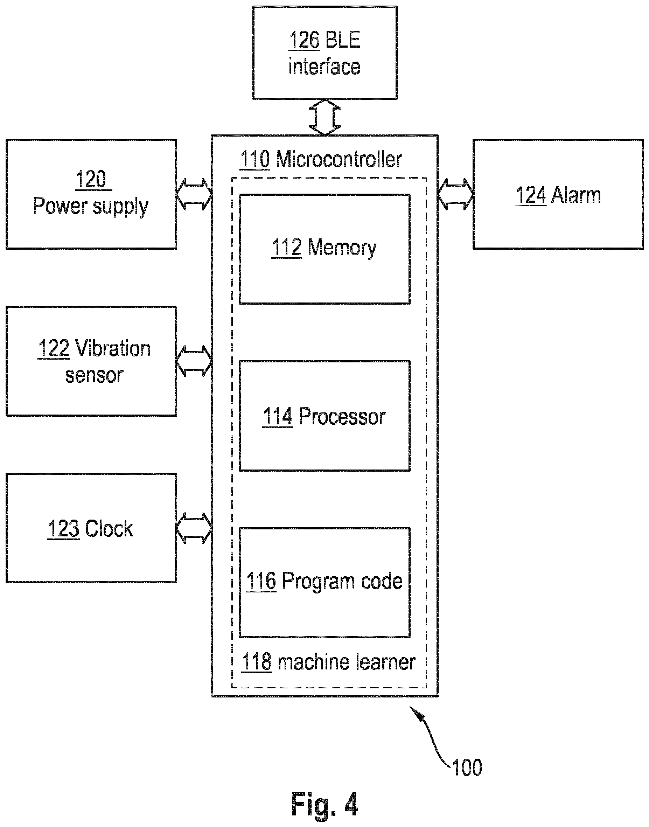

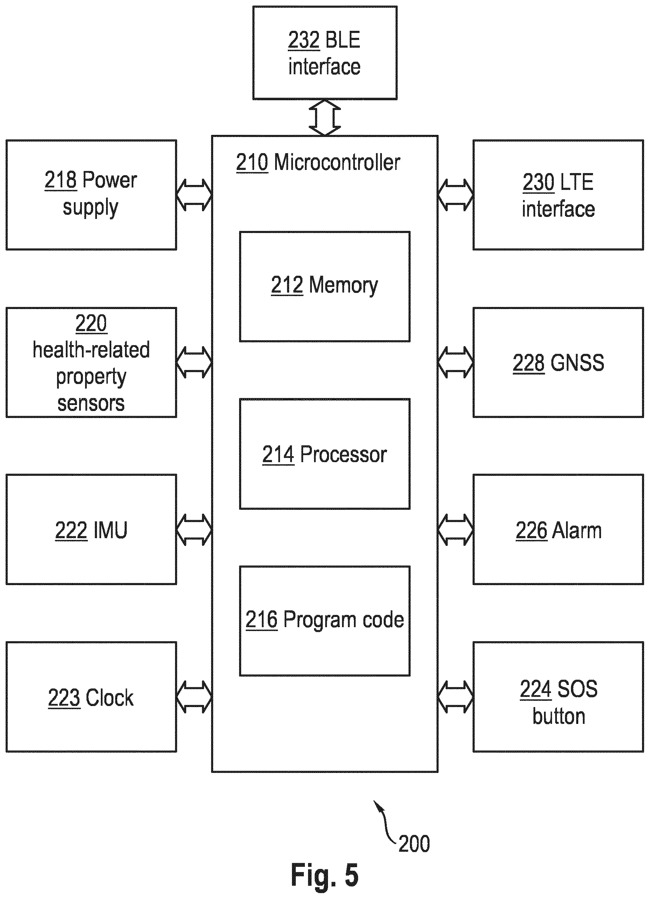

The structures and functions of the tool-tag 100 and the worker-tag 200 will be explained in more detail referring to the block diagrams according to **fig. 4** and, respectively, **fig. 5****.**

As is shown in **fig. 4****,** the tool-tag 100 comprises a microcontroller **110.** The microcontroller 110 comprises a memory **112,** which may comprise volatile and non-volatile memory units. Furthermore, the microcontroller 110 comprises a processor **114** on which program code **116** can be executed. The program code 116 may be stored in the memory 112. The program code 116 is configured to form a machine learner **118** when being executed on the processor 114 and using the memory 112. The machine learner 118 may implement a Tiny-ML algorithm.

The tool-tag 100 has a power supply **120,** which may, for example, comprise a battery. The power supply 120 supplies energy to all electrical parts of the tool-tag 100. The power supply 120 comprises a battery. Alternatively, or additionally, it may comprise an energy harvesting device, e. g. an radio-energy collecting antenna, a movement energy collector, a photovoltaic cell, or a thermoelectric generator. The power supply 120 is configured such that the tool-tag 100 has a service-free lifetime of at least 3 years. This is achieved by adequate sizing of the power supply and strict power management of the tool-tag 100.

A vibration sensor **122** is connected to the microcontroller 110. It is configured to sense vibrations of a tool the tool-tag 100 is attached to. Vibrations sensed by the vibration sensor 122 are analysed by the machine learner 118.

The machine learner 118 may be trained to recognize a working condition property of the tool the tool-tag 100 is attached to. For example, the machine learner 118 may be trained to determine if the attached tool is working or not working. In further embodiments the machine learner 118 may be trained to recognize the type of the attached tool and / or of an underground the attached tool is working.

Furthermore, the tool-tag 100 comprises a clock **123** for determining a current time. The clock 123 may also be configured to have a timer functionality, i. e. to measure time durations. The clock 123 may be synchronized to other clocks of the system 10 (see fig. 1). Using the clock 123, the working condition property determined by the microcontroller 110, in particular by the machine learner 118, may be linked to the current time. A start time, an end time and / or a duration of the working condition property may be measured.

The tool-tag 100 further comprises an alarm **124.** The alarm 124 may be used for finding the tool-tag 100 or the attached tool or for warning in cases the attached tool is in an unintended state, for example if the attached tool is outside a specific construction site, which may indicate a possible theft.

The tool-tag 100 is equipped with a communication interface. In the present embodiment the communication interface comprises a BLE (Bluetooth Low Energy-) interface **126.** In other embodiments the communication interface may implement a wireless and / or a cellular network-based interface, for example based on the so-called "4G" or "5G" standard.

As is shown in **fig. 5****,** the worker-tag 200 comprises a microcontroller **210.** The microcontroller 210 comprises a memory **212,** which may comprise volatile and non-volatile memory units, a processor **214** on which program code **216** can be executed. The program code 216 may be stored in the memory 212.

The worker-tag 200 has a power supply **218,** which may, for example, comprise a battery. Alternatively, or additionally, also the power supply 218 may comprise an energy harvesting device similar to the energy harvesting device of the power supply 120. Preferably, the power supply is cordless and rechargeable. The power supply 218 supplies energy to all electrical parts of the worker-tag 200.

The worker-tag 200 may comprise one or more sensors for sensing a health-related property. The embodiment shown in fig. 5, for example, comprises health-related sensors **220** comprising a temperature sensor, a humidity sensor, and a dust sensor for sensing particle densities, particle sizes and / or materials of particles in the air, so that the quality of air the worker is breathing can be determined. In alternative embodiments, the health-related sensors 220 may also comprise a skin impedance sensor, a heart rate sensor, a blood-pressure sensor, and / or a blood oxygen sensor. Skin impedance and / or heart rate may, for example, be used to determine the worker's degree of fatigue.

The worker-tag 200 further comprises an inertial measurement unit (IMU) **222.** The IMU 222 may, preferably, be a six degrees-of-freedom-IMU. Querying the IMU 222, the microcontroller 210, in particular the program code 216, may be configured to detect unintended accelerations, e. g. unintended falls or strong vibrations, of the worker-tag 200. It may also be configured to detect whether the worker-tag 200 is worn by the worker or not. The output of the IMU 222 may also serve as health-related property.

Furthermore, the worker-tag 200 comprises a clock **223** for determining a current time. The current time may be a global time, based, for example, on internet sources, cellular phone signals or GPS signals. The clock 223 may be configured to have a timer functionality, i. e. to measure time durations. The clock 223 may be synchronized to other clocks of the system 10 (see fig. 1). Using the clock 223, the health-related property may be linked to the current time. A start time, an end time and / or a duration of the health-related property may be measured.

An emergency button in the form of a SOS button **224** may be configured such that, when activated, the worker-tag 200 automatically calls for support for the worker the worker-tag 200 is attached to. An alarm **226,** for example an acoustical and / or an optical alarm, for example comprising a loudspeaker and or a LED, may be triggered by the SOS button 224 and / or remotely via the microcontroller 210.

For localizing, the worker-tag 200 comprises a satellite-based GNSS module **228.** For communication purposes and for refining localization of the worker-tag 100 it comprises two communication interfaces, in particular a cellular network communication interface in the form of a LTE interface **230** and a BLE interface **232.** Whereas the LTE-interface 230 enables to communicate over long distances, and, for example, to establish an Internet connection, the BLE interface 232 is configured to communicate with the BLE interface 126 (fig. 4) of the tool-tag 100 (fig. 4).

Furthermore, the microcontroller 210 and the BLE interface 232 are configured to determine a distance and a direction to a tool-tag 100 (fig. 4), in particular, if the tool 12 or the corresponding tool-tag 100 are in a vicinity of the worker-tag 200.

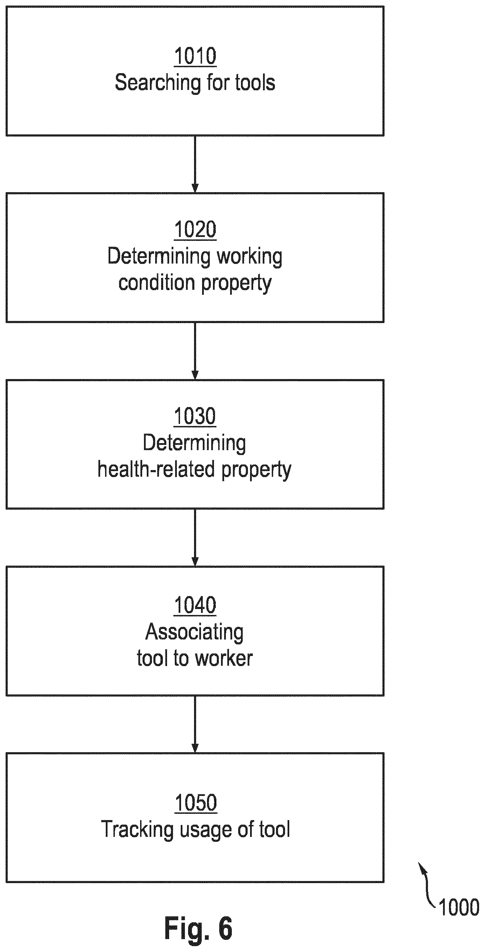

Fig. 6 shows a flowchart of a method **1000** of tracking a usage of tool used by a construction worker.

In a first phase **1010** worker-tags 200 search for tool-tags 100, and, hence, for tools 12, in their vicinity by searching for signals 22 receivable by their BLE interface. The worker-tags 200 connect to the one or a limited number of the closest tool-tags 100 and establish a data connection to these tool-tags 100. If the tool-tags 100 emit broadcast signals, then the worker-tags 200 only need to read out and analyse the broadcast signals. Using broadcast signals may also help prolong life time of the tool-tags 100 or their power supplies 120 as one-way communication is more energy efficient than two-way communication.

In a phase **1020,** which may be subsequent and / or in parallel to the phase 1010, the tool-tags 100 determine the working condition properties of the tools 12 they are attached to and transmit them via their BLE interfaces 126 to the worker-tag 200 they are connected to. In particular, they transmit an identification code for reproducible identification of the corresponding tool-tag 100 or, respectively, the tool 12 the tool-tag 100 is attached to. Furthermore, they transmit a status of the tool 12 they are attached to, in particular if the tool 12 is running or no, and a timestamp of the time the tool 12 entered into that status, for example the timestamp of when the tool 12 was switched on or switched off for the last time. It is conceivable that also a type of the tool 12 is transmitted if the tool-tag 100 is configured to determine such a type.

In a phase **1030** a health-related property is determined by the worker-tag 200. For example, the worker-tag 200 may measure vibrations concerning the worker it is attached to and a start time of the last beginning of these vibrations, or, respectively of the last start time, when no vibrations were registered any more. In an alternative embodiment the health-related property is determined based on the duration of use of the tool and on a typical value for the vibration load induced by the specific type of tool.

The working condition properties and the health-related properties, each including their timestamps, and the distances between tool-tags 100 and worker-tags 200 are then transferred from the worker-tags 200 via their LTE interfaces 230 or their Internet connections to the cloud-based computer 300.

The cloud-based computer 300 forms therefore an endpoint collecting at least all working condition properties of all tool-tags 100, identified e. g. by their identification codes, all health-related properties, all corresponding timestamps, in particular all corresponding start times, and all measured distances.

During a phase **1040,** these data are analysed using an extended Kalman filter for associating tools 100 to workers 18. In particular, those pairs of tools 100 and workers 18 may be formed wherein the tools 100 are closest to the corresponding worker-tags 200 or at least within a certain maximum distance from the corresponding worker-tag 200. In case of tools 12 that produce characteristic vibrations, e. g. hammer drilling power tools, chiselling tools or angle grinders, additional requirements may be that working condition properties, e. g. vibrations of the tools 12, are synchronous, in particular have similar or identical start times, to health-related properties like vibrations measured by the worker-tags 200. Preferably, the analysis considers only tools 12 for which their working condition properties corresponds to that the tools 12 are running. That is, tools 12 that are not running, may be disregarded and / or excluded from further analysis or usage tracking. The worker-tag may comprise and / or form the Kalman filter. Alternatively, or additionally, the cloud-based computer may comprise and / or form the Kalman filter.

An advantage of using a Kalman filter for associating tools 12 to workers 18 is that it provides a probabilistic confidence level of the association. In case the confidence level is unacceptably low, a warning may be uttered, or a plurality of equally possible tool-worker associations may be registered.

The confidence level may alternatively, or additionally, be based on the occurrence of similar distances between tool-tags 100 and different worker-tags 200.

Finally, during a phase **1050,** the working condition properties of the running tools 12 and, preferably, also the health-related properties of the worker-tags 200 associated with the tool-tags 100 which are attached to the running tools 12, may be logged in a database or analysed further in order to track the usages of the tools 12.

### Reference signs

- 10: system
- 12: tool
- 18: worker
- 20: construction site
- 22: signal
- 100: tool-tag
- 110: microcontroller
- 112: memory
- 114: processor
- 116: program code
- 118: machine learner
- 120: energy supply
- 122: sensor
- 123: clock
- 124: alarm
- 126: BLE interface
- 200: worker-tag
- 210: microcontroller
- 212: memory
- 214: processor
- 216: program code
- 218: energy supply
- 220: sensor
- 222: IMU
- 224: SOS button
- 226: alarm
- 228: GNSS module
- 230: LTE interface
- 232: BLE interface
- 300: cloud-based computer
- 1000: method
- 1010: phase
- 1020: phase
- 1030: phase
- 1040: phase
- 1050: phase

## Claims

1. **Method (1000)** of tracking a usage of a tool (12) used by a construction worker (18), at least comprising the step of associating a tool (12) to a worker (18), so that a tool-worker pair is determined, based at least on a distance between the tool (12) and the worker (18).

2. Method (1000) according to the previous claim, **characterized in that** a working condition property of the tool (12) is determined and / or logged.

3. Method (1000) according to one of the previous claims, **characterized in that** the working condition property is determined by the tool (12) and / or a tool-tag attached to the tool (12).

4. Method (1000) according to one of the previous claims, **characterized in that** the working condition property is determined by analysing vibrations and / or by analysing electric, magnetic, and / or electro-magnetic fields.

5. Method (1000) according to one of the previous claims, **characterized in that** a health-related property of the worker (18) is determined.

6. Method (1000) according to one of the previous claims, **characterized in that** a confidence level of the association between the tool (12) and the worker (18) is calculated.

7. Method (1000) according to one of the previous claims, **characterized in that** the tool (12) is associated to the worker (18) based on the working condition property.

8. Method (1000) according to one of the previous claims, **characterized in that** the tool (12) is associated to the worker (18) based on the health-related property of the worker (18).

9. **Worker-tag** (200), that is configured to be attached and / or to be carried by a construction worker (18), having a microcontroller and a communication interface, for example a BLE interface (232), that is configured to determine a distance to a tool (12).

10. Worker-tag (200) according to the previous claim, **characterized in that** the worker-tag (200) is configured to determine a working condition property of a tool (12) used by the construction worker (18).

11. **System (10)** comprising a tool (12), a worker-tag (200) according to claim 9 or 10 attachable to a worker (18), wherein the system (10) is configured to track a usage of the tool (12) using the method (1000) according to one of the claims 1 to 8.
